# EUROPEAN PATENT SPECIFICATION

(11) **EP 4 139 111 B1**
(45) Date of publication and mention of the grant of the patent: **25.06.2025**
(21) Application number: 21751606.1
(22) Date of filing: 21.04.2021
(51) Int. Cl.: B29C 45/78, B29C 45/80

(54) **SYSTEM FOR TRANSFORMING THERMOSETTING MATERIALS AND OPTIMIZING THE METERING OF THE RAW MATERIAL BY MEANS OF PRESSURIZED COLD CHAMBER MOLDING**
SYSTEM ZUR UMWANDLUNG VON WÄRMEHÄRTBAREN MATERIALIEN UND OPTIMIERUNG DER DOSIERUNG DES ROHMATERIALS MITTELS KALTKAMMERDRUCKFORMUNG
SYSTÈME DE TRANSFORMATION DE MATÉRIAUX THERMODURCISSABLES ET D'OPTIMISATION DU DOSAGE DE LA MATIÈRE PREMIÈRE AU MOYEN D'UN MOULAGE DE CHAMBRE FROIDE SOUS PRESSION

(30) Priority: 22.04.2020 IT 202000008566
(43) Date of publication of application: 01.03.2023
(73) Proprietor: Ometec S.r.l., 03039 Sora (FR) (IT)
(72) Inventor: CECCACCI, Peppino, 03039 Sora (FR) (IT)
(74) Representative: Fiammenghi, Eva
(86) International application number: PCT/IB2021/053281
(87) International publication number: WO 2021/214678

(56) References cited:
- DE-A1- 1 948 455
- JP-A- H05 185 473

## Description

### Field of the art

The present invention operates in the scope of transformation of thermosetting materials. More particularly, in the process of injection molding of thermosetting materials. Still more specifically, the object of the present patent regards the optimization of the metering of the raw material within the mold impression through a pressurized cold chamber distribution system.

### Prior art

Thermosetting materials react to heat, which triggers a three-dimensional crosslinking process. In practice, it is due to the combined effect of heat and pressure that a shape can be conferred to thermosetting materials. These have a lattice formed by chains joined by strong covalent bonds, and they can be considered as a single large.

Unlike thermoplastic polymers, thermosetting polymers have an irreversible crosslinking. The production process is carried out in two passages:
- the first passage occurs in the chemical industry, where the aligned chains are prepared;
- the second passage is performed in the manufacturing industry, in which the polymerization is triggered with the aid of suitable temperature and pressure.

Generally, thermosetting polymers have better characteristics than thermoplastic polymers: indeed, they possess mechanical, chemical, thermal, electrical and size properties of higher quality. Nevertheless, since the thermosetting polymers have polymer chains that are well-compacted, they confer a typically fragile behavior to the product.

Thermosetting materials cool due to the three-dimensional crosslinking and once complete cooling is reached, they can no longer be reprocessed, as can occur for the thermoplastic materials. Clearly this can be a limit, also in light of the possible waste. Indeed, these polymers carbonize under the action of an overly high temperature, but they do not catch fire.

In industry, the thermosetting polymers are widely used in technical applications and in fields such as the automotive and electronics fields, they take form with heat, which irreversibly modifies their chemical structure, and they can no longer be softened.

The injection molds are certainly the most widespread of the category for the transformation and molding of these products. The production process starts in introducing the material in the hopper, which is loaded in a container, termed feed cylinder which meters each plastic part to be freed with every molding activity of the press. Before the resin reaches the mold and the subsequent "baking" of the product, the material traverses the cylindrical transport chamber. The material, mixed by the plasticization screw, i.e. the glass fiber impregnated with the various resins, is metered within the cylinder and subsequently "pushed" at high pressure by the screw located inside the plasticization cylinder; such screw injects the material within the mold. The cycle time varies depending on the complexity of the semifinished product requested. Once the internal casting has terminated, the plastic product solidifies within the mold.

The technology present today, where the material is injected in the mold and by means of distribution channels arrives on the various impressions, is termed riser in jargon.

The material injected by the piston or screw must in fact fill three parts: the volume of the figure, the volume of the riser, and the material which is commonly defined as a bearing. The latter contribution identifies the "surplus" material which serves for compacting the material due to the post-pressure at the end of injection. The post-pressure is transferred to the mold due to this cord of excess material. This inevitably involves a waste of raw material since the riser itself cannot be repositioned in the process.

The present invention proposes overcoming these limits through the attainment of a cooled distributor (Pressurized cold chamber) within the mold that is capable of making the material flow at controlled temperature from the injection cylinder to the various cavities. The main object is to uniformly distribute, and with equal weight, the material into the impressions of the mold and prevent over-metering phenomena in the same, with consequent blocking of the piece in the die. This system acquires particular importance in the presence of a plurality of impressions, leading to industrial advantages, reducing material waste and relative costs. Using low temperatures within the distribution channel, there is the problem of the mechanical resistance of such distributor, such as the resistance to the pressure exerted thereon by the material that traverses it in the injection step or the abrasion resistance exerted by the glass fiber contained in the material moving at its interior. On such matter, the distributor is sized by accounting for the pressures involved and the position of the flow points of the material into the various mold cavities. For the abrasion resistance, the use of Hardox type steel or the like is considered, or anti-wear or anti-friction surface treatments of the zones affected by the passage of the raw material, for the purpose of preserving the integrity of the same.

The object of the present patent is therefore to resolve the aforesaid problems by optimizing and ensuring the quantity of material in equal measure in the single cavities through a pressurized cold chamber distribution system, controlling the temperature and managing the pressure on the material at each point within the mold. The document JP H05 185473 A discloses a system for transforming thermosetting materials and optimizing the metering of raw material by means of pressurized cold chamber molding, - a thermoregulation circuit provided with at least one temperature and pressure control sensor adapted to adjust the temperature and control the pressure of a thermosetting material within a pressurized cold chamber distribution channel - a cooling circuit adapted to adjust the temperature within said pressurized cold chamber distribution channel.

### Description of the invention

According to the present invention, a system is attained for transforming thermosetting materials and optimizing the metering of raw material by means of pressurized cold chamber molding provided with innovative characteristics which effectively resolve the abovementioned problems.

The present patent application proposes an alternative solution to the transformation of the thermosetting materials, reducing the waste of raw material and optimizing its use and relative costs in light of industrial production.

This particular injection molding system is constituted by a distributor cooled within the mold, capable of making the material flow at controlled temperature from the injection cylinder to the various cavities. In order to make the cold chamber distributor, a thermoregulation circuit is implemented which is capable of controlling the temperature and the viscosity. The temperature of the material within the cold chamber must be maintained between 20°C and 60°C depending on the process. In order to overcome the mechanical resistance of said distribution channel, the latter is suitably sized, accounting for the pressures involved and the position of the flow points of the material in the various cavities. For the abrasion resistance exerted by the glass fiber contained within the moving material, a Hardox type steel or the like is used, the surface of the zones affected by the passage of the material is processed with anti-wear or anti-friction treatments in order to preserve the integrity of the same and ensure greater longevity. Advantageously, the present invention allows a processing at low and controlled temperatures, considerably reducing the possibility of polymerization of the material during the travel towards the impressions.

By controlling temperature and pressure on the material during its distribution, it is possible to meter the right quantity, and uniformly, into each mold impression, eliminating over-metering phenomena in the same with consequent block of the piece in the die.

On such matter, suitable shutters are arranged with the function of flow regulators actuated through mechanical, electrical or hydraulic devices:
- *Mechanical -* in said mechanical devices, a reaction spring is mechanically interposed in the rear part of the shutters. In injection step the pressure exerted on the material by the press pressurizes the cold chamber. When the pressure exerted on the material within the chamber and in the distribution channels exceeds the force exerted by the springs placed on the rear part of the shutters, it causes the opening of the same, determining a metering of the material, in the single mold cavities, of equal measure. The shutters are sized with different section within the channel, preferably 10 mm shutter side towards the mold cavity and preferably 15 mm upper channel part. The pressure applied on the material acts on the shutters within the channel, causing the lifting of the same and due to the springs they set forth resistance so as to ensure the right flow. The pressure and temperature sensors ensure the monitoring with the object of displaying the actual values.

- *Electrical -* in said electrical devices, the actuation of the shutters is entrusted to electric motors situated on the shutters. In this case, the pressure exerted on the material within the chamber in injection step is monitored by means of suitable sensors. Then, upon reaching the established pressure within the chamber, the motors determine the opening of the single shutters in order to allow the metering of the material in the mold cavities. By continuously monitoring the pressure in the chamber in injection step, a feedback is created that causes the opening or the closing of the single shutters so as to maintain constant the pressure within the chamber.
- *Hydraulic -* in said hydraulic devices the actuation of the shutters is entrusted to oil-pressure cylinders situated on the shutters. The pressure exerted on the material within the chamber is monitored in injection step by means of suitable sensors. Then, upon reaching the established pressure within the chamber, the hydraulic cylinders determine the opening of the single shutters in order to allow the metering of the material in the mold cavities. By continuously monitoring the pressure in the chamber in injection step, a feedback is created that causes the opening or the closing of the single shutters so as to maintain constant the pressure within the chamber.

Said devices thus allow maintaining constant the desired pressure in the chamber, ensuring a metering of the material in the single cavities of equal quantity. Due to said system, the optimization of the metering is considerably greater than that of current production systems, eliminating the riser and waste of raw material and also producing a lower quantity of waste and over-metered pieces.

The system described up to now can also be equipped with an alert device adapted to emit signals at least of acoustic type if there is overheating of the material beyond the selected limit, preventing the latter from starting polymerization before reaching the impression. The advantages offered by the present invention are evident in light of the description set forth up to now and will be even clearer due to the enclosed figures and to the relative detailed description.

### Description of the figures

The invention will be described hereinbelow in at least a preferred embodiment as a non-limiting example, with the aid of the enclosed figures in which:
- FIGURE la shows a 3D view, exemplifying of the invention, with shutters actuated by mechanical devices.
- FIGURE 1b illustrates the vertical section in front view of the invention with shutters actuated by mechanical devices.
- FIGURE 1c shows the vertical section in side view of the invention with shutters actuated by mechanical devices.
- FIGURE 2a shows a 3D view, exemplifying of the invention, with shutters actuated by electrical devices.
- FIGURE 2b illustrates the vertical section in front view of the invention with shutters actuated by electrical devices.
- FIGURE 2c shows the vertical section in side view of the invention with shutters actuated by electrical devices.
- FIGURE 3a shows a 3D view, exemplifying of the invention, with shutters actuated by hydraulic devices.
- FIGURE 3b illustrates the vertical section in front view of the invention with shutters actuated by hydraulic devices.
- FIGURE 3c shows the vertical section in side view of the invention with shutters actuated by hydraulic devices.

### Detailed description of the invention

The present invention will now be illustrated merely as a non-limiting or non-binding example, with reference to the figures which illustrate several embodiments relative to the present inventive concept.

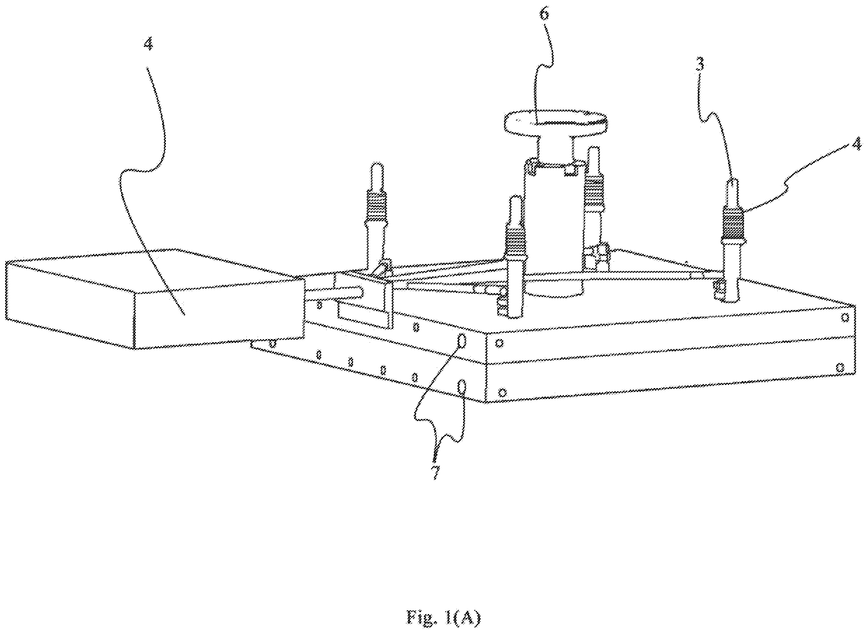

FIGS. 1a, 1b and 1c; FIGS. 2a, 2b, 2c and FIGS. 3a, 3b and 3c indicate the main elements constituting the three variants of injection mold with pressurized cold chamber with a different type of device (mechanical, electrical or hydraulic) adapted to control the step for opening and closing said shutters 3. We will proceed with the description of the components in common between the three variants in order to then describe the actuation differences of said devices 8, 9, 10.

With reference to FIGS. 1a 2a, and 3a, said systems for optimizing the metering comprise a thermoregulation circuit provided with at least a temperature and pressure control sensor 2 adapted to adjust the temperature and control the pressure of the material within the pressurized cold chamber distribution channel 1.

Said pressurized cold chamber distribution channel 1 within the mold, which is suitably sized and processed with anti-friction and anti-wear surface treatments, is adapted to adjust the flow of the raw material from the injection cylinder 6 to the impressions 5 at controlled temperature.

A cooling circuit 7 is present which is adapted to adjust the temperature within said pressurized cold chamber distribution channel 1. By maintaining the temperature between 20°C and 60°C, depending on the type of process, the possibility of polymerization of the material within the distribution channel is reduced. Said control unit 4 is adapted to manage the information detected by said temperature and pressure control sensors 2 by means of connectors of sensors 12 and consequently actuate the devices for opening said shutters 3 in real time.

Said shutters 3 for each impression 5 have the function of flow regulator of the raw material adapted to maintain pressure on the material within the distributor (Pressurized cold chamber), ensuring a quantity of material in equal measure in the single impressions 5. In order to ensure the single dose, a constant pressure is applied on the material, maintaining said shutters 3 closed in injection step up to reaching a desired pressure within the chamber, measured at the single injection points, after which the single shutters 3 are opened, monitoring the pressure on the material. Upon varying the pressure, said shutters are opened or closed so as to stably maintain the desired pressure on the material.

The proposed three variants produce an analogous result and also differ regarding the interaction attained between said shutters 3 and said devices 8, 9, 10:

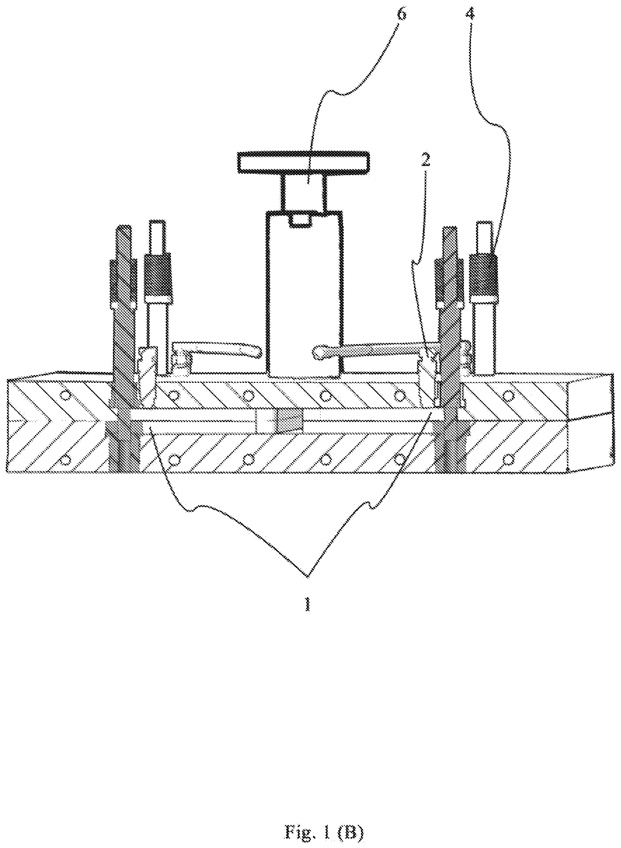

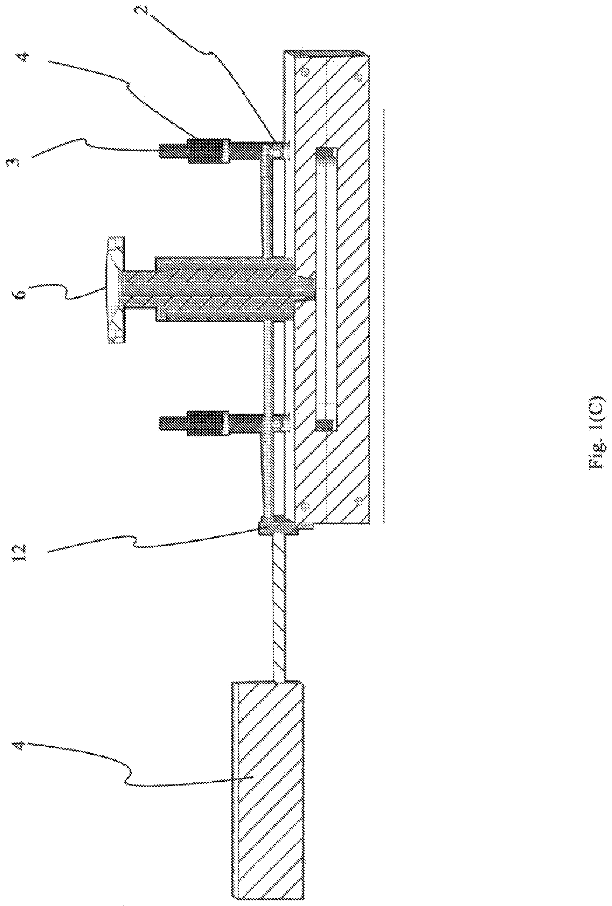

- FIGS. 1a, 1b and 1c show said shutters 3 with the function of flow regulators of the material actuated through devices of mechanical type. In said mechanical devices, a reaction spring 8 is mechanically interposed in the rear part of said shutters 3. In injection step, the pressure exerted on the material by the press pressurizes the cold chamber 1. When the pressure exerted on the material within the chamber and in the distribution channels exceeds the force exerted by said reaction springs 8 placed on the rear part of said shutters 3, it causes the opening of the same, determining a metering of the material of equal measure in the single impressions 5. Said shutters 3 are sized with different section within the channel, 10 mm on the shutter side towards the mold cavity and 15 mm on the upper channel part. The pressure applied on the material acts on said shutters 3 within the channel, causing the lifting of the same and due to the reaction springs 8 they set forth resistance so as to ensure the right flow. The pressure and temperature sensors 2 ensure the monitoring with the object of displaying the actual values.

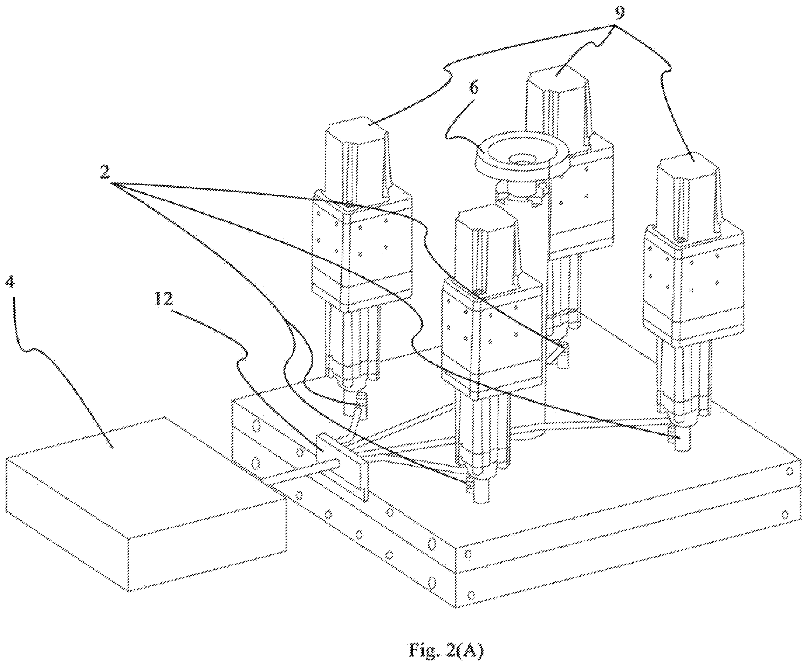

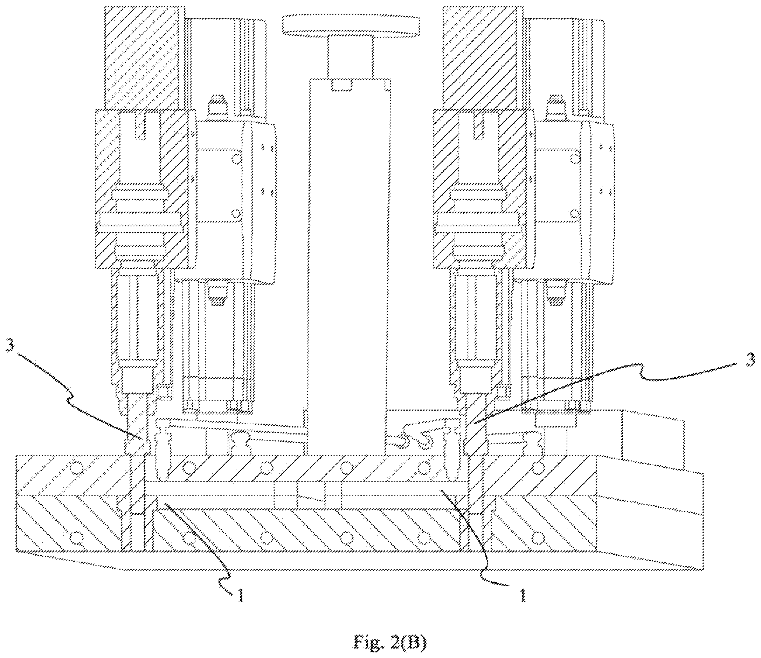

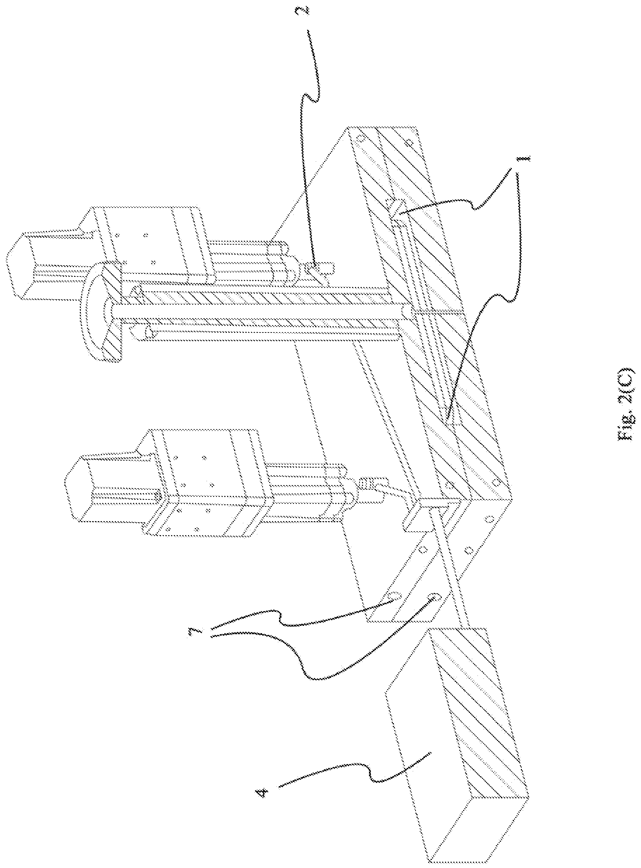

- FIGS. 2a, 2b and 2c show said shutters 3 with the function of flow regulators of the material actuated through devices of electrical type. In said electrical devices the actuation of the shutters is entrusted to electric motors 9 situated on said shutters 3. In this case, the pressure exerted on the material within the chamber 1 in injection step is monitored by means of suitable temperature and pressure control sensors 2. Then, upon reaching the established pressure within the chamber 1, the electric motors 9 determine the opening of said shutters 3 in order to allow the metering of the material in the single impressions 5. By continuously monitoring the pressure in the chamber 1 in injection step, a feedback is created that causes the opening or the closing of said shutters 3 so as to maintain constant the pressure within the chamber.

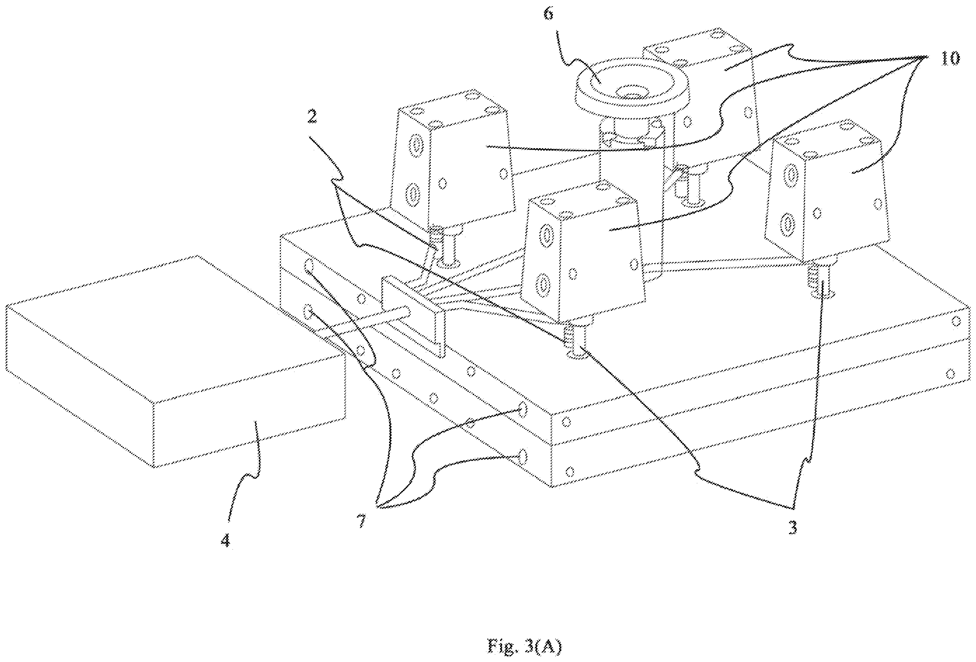

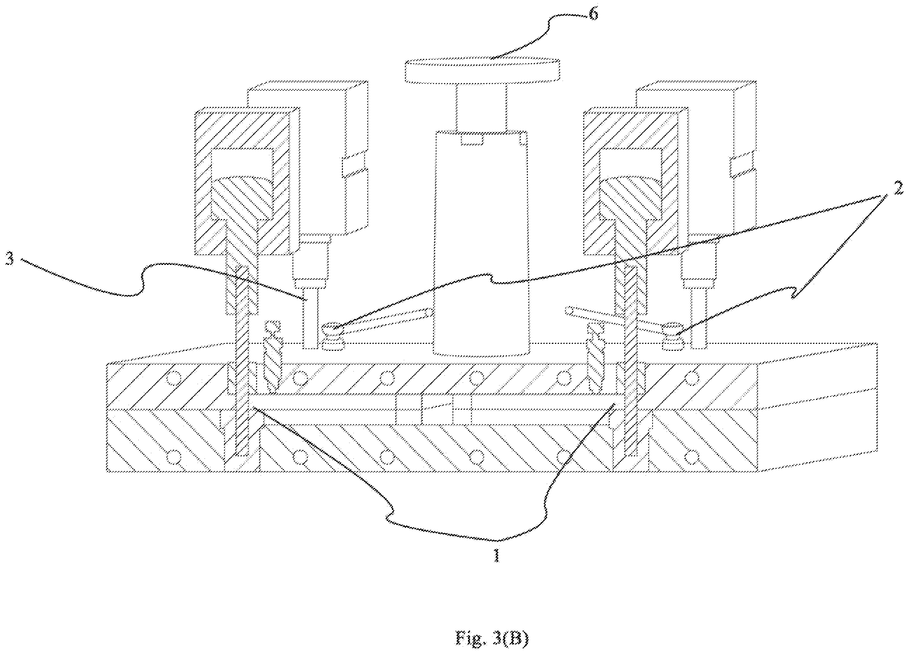

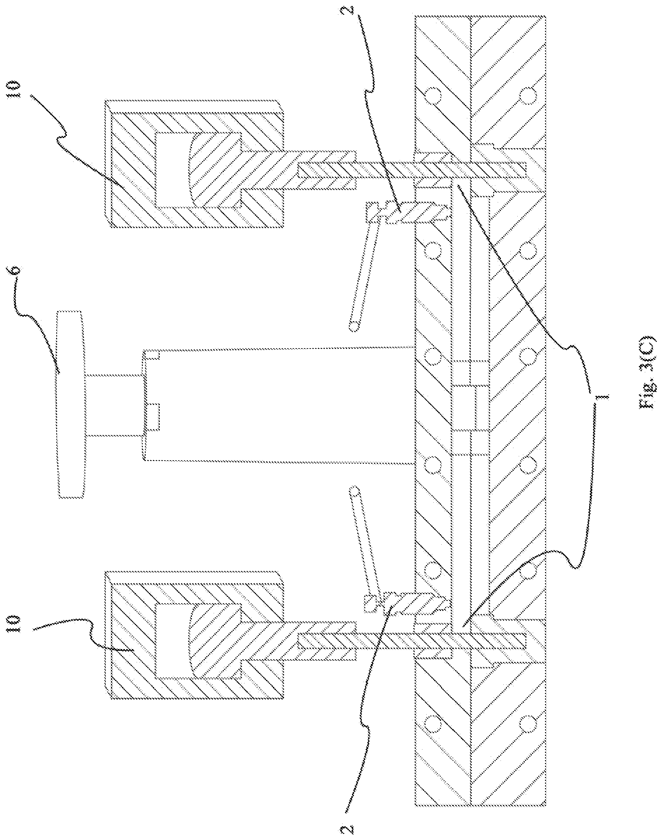

- FIGS. 3a, 3b and 3c show said shutters 3 with the function of flow regulators of the material actuated through devices of hydraulic type. In said hydraulic devices, the actuation of said shutters 3 is entrusted to oil-pressure cylinders 10 situated on said shutters 3. The pressure exerted on the material within the chamber 1 is monitored in injection step by means of said temperature and pressure control sensors 2. Then, upon reaching the established pressure within the chamber 1, the hydraulic cylinders 10 determine the opening of said shutters 3 in order to allow the metering of the material in the single impressions 5. By continuously monitoring the pressure in the chamber 1 in injection step, a feedback is created that causes the opening or the closing of said shutters 3 so as to maintain constant the pressure within the chamber.

## Claims

1. System for transforming thermosetting materials and optimizing the metering of raw material by means of pressurized cold chamber molding, **characterized in that** it comprises:
- a thermoregulation circuit provided with at least a temperature and pressure control sensor (2) adapted to adjust the temperature and control the pressure of a thermosetting material within a pressurized cold chamber distribution channel (1), maintaining it between 20°C and 60°C as a function of the process; said pressurized cold chamber distribution channel (1) within the mold being suitably sized and processed with anti-friction and anti-wear surface treatments adapted to adjust the flow of said thermosetting material from an injection cylinder (6) to a plurality of impressions (5) at controlled temperature, said temperature and pressure control sensors (2) being adapted to monitor the pressure exerted on the material within the pressurized cold chamber (1);
- a cooling circuit (7) adapted to adjust the temperature within said pressurized cold chamber distribution channel (1);
- at least a shutter (3) for each impression (5) with the function of flow regulator of said thermosetting material actuated through mechanical, electrical or hydraulic devices; said shutters (3) being adapted to remain in a closed position during the step of injecting the material up to reaching the desired pressure within the chamber and measured at the single injection points, subsequently said shutters (3) being adapted to be gradually opened, maintaining the desired pressure on the material measured by said sensors for controlling pressure (2), said shutters (3) being actuated through electrical devices such as electrical motors (9); said electrical motors (9) are situated on said shutters (3);
- a control unit (4) adapted to manage the information received by said temperature and pressure control sensors (2) by means of connectors of sensors (12) and consequently actuate the devices for opening said shutters (3) in real time, said control unit (4) being adapted to manage the information provided in real time by said temperature and pressure control sensors (2) and manage the opening of said shutters (3) so as to maintain constant the desired pressure on the material within the chamber.

2. System for transforming thermosetting materials and optimizing the metering of raw material by means of pressurized cold chamber molding, according to the preceding claim 1, **characterized in that** it comprises said shutters (3) actuated through mechanical devices such as reaction springs (8); said reaction springs (8) are mechanically interposed in the rear part of the shutters (3) so that during the injection step, the pressure exerted on the material by the press pressurizes the cold chamber (1); said suitably-sized shutters (3) being adapted to be opened when the pressure exerted on the material within the pressurized cold chamber (1) and within the distribution channels exceeds the force exerted by the reaction springs (8), causing the gradual opening of the shutters (3); said sensors for controlling temperature and pressure (2) being adapted to ensure the monitoring of the values and providing the information to the control unit (4) in real time.

3. System for transforming thermosetting materials and optimizing the metering of raw material by means of pressurized cold chamber molding, according to the preceding claim 1, **characterized in that** it comprises said shutters (3) actuated through hydraulic devices such as oil-pressure cylinders (10); said oil-pressure cylinders (10) are situated on said shutters (3); said temperature and pressure control sensors (2) being adapted to monitor the pressure exerted on the material within the pressurized cold chamber (1); said control unit (4) being adapted to manage the information provided in real time by said temperature and pressure control sensors (2) and manage the opening of said shutters (3) so as to maintain constant the desired pressure on the material within the chamber.

4. System for transforming thermosetting materials and optimizing the metering of raw material by means of pressurized cold chamber molding, according to any one of the preceding claims, **characterized in that** said pressurized cold chamber distribution channel (1) is made of Hardox type steel or the like in order to overcome the abrasion resistance of the thermosetting material.

5. System for transforming thermosetting materials and optimizing the metering of raw material by means of pressurized cold chamber molding, according to any one of the preceding claims, **characterized in that** it comprises an alert device (11) adapted to emit signals at least of acoustic type if there is overheating of the material beyond the selected limit.

6. System for transforming thermosetting materials and optimizing the metering of raw material by means of pressurized cold chamber molding, according to any one of the preceding claims, **characterized in that** it comprises a temperature and pressure detection system integrated within the mold adapted to control the temperature and pressure within the cold chamber in order to identify over-metering phenomena.

7. System for transforming thermosetting materials and optimizing the metering of raw material by means of pressurized cold chamber molding, according to any one of the preceding claims, **characterized in that** it comprises control sensors capable of communicating with said control unit (4) when the material reaches the furthest point of the figure to be filled.

8. System for transforming thermosetting materials and optimizing the metering of raw material by means of pressurized cold chamber molding, according to any one of the preceding claims, **characterized in that** it comprises a software for analysis of data between the finish of the final products and the mold adapted to monitor the level of wear or imperfections of each impression (5).

9. System for transforming thermosetting materials and optimizing the metering of raw material by means of pressurized cold chamber molding, according to any one of the preceding claims, **characterized in that** it comprises an alert device connected to the control unit (4) adapted to emit signals at least of acoustic type in order to warn if it is necessary to have a cleaning cycle.

## Patentansprüche

1. System zur Umwandlung von wärmehärtbaren Materialien und Optimierung der Dosierung von Rohmaterial mittels Kaltkammerdruckformung, **dadurch gekennzeichnet, dass** es aufweist:
- einen Temperaturregelungskreis, der mit zumindest einem Temperatur- und Drucksteuerungssensor (2) ausgestattet ist, der dazu ausgelegt ist, die Temperatur eines wärmehärtbaren Materials in einem Verteilerkanal (1) einer unter Druck stehenden Kaltkammer einzustellen und den Druck des wärmehärtbaren Materials zu regeln, sie als Funktion des Prozesses zwischen 20 °C und 60 °C zu halten, wobei der Verteilerkanal (1) der unter Druck stehenden Kaltkammer innerhalb der Form in geeigneter Größe ausgeführt und mit Anti-Reibungs- und Anti-Verschleiß-Oberflächenbehandlungen versehen ist, die dazu ausgelegt sind, den Fluss des wärmehärtbaren Materials von einem Einspritzzylinder (6) zu mehreren Formnestern (5) bei gesteuerter Temperatur einzustellen, wobei die Temperatur- und Drucksteuerungssensoren (2) dazu ausgelegt sind, den auf das Material in der unter Druck stehenden Kaltkammer (1) ausgeübten Druck zu überwachen;
- einen Kühlkreis (7), der dazu ausgelegt ist, die Temperatur in dem Verteilerkanal (1) der unter Druck stehenden Kaltkammer zu regulieren;
- zumindest einen Verschluss (3) für jedes Formnest (5) mit der Funktion eines Durchflussreglers für das wärmehärtbare Material, der durch mechanische, elektrische oder hydraulische Einrichtungen betätigt wird; wobei die Verschlüsse (3) so ausgelegt sind, dass sie während des Schritts des Einspritzens des Materials bis zum Erreichen des gewünschten Drucks innerhalb der Kammer, gemessen an den einzelnen Einspritzpunkten, in einer geschlossenen Position verbleiben, wobei die Verschlüsse (3) nachfolgend so ausgelegt sind, dass sie allmählich geöffnet werden, wobei der gewünschte Druck auf das Material, gemessen durch die Sensoren zum Steuern des Drucks (2), aufrechterhalten wird, wobei die Verschlüsse (3) durch elektrische Einrichtungen wie Elektromotoren (9) betätigt werden; wobei die Elektromotoren (9) an den Verschlüssen (3) angeordnet sind;
- eine Steuereinheit (4), die dazu ausgelegt ist, die von den Temperatur- und Drucksteuerungssensoren (2) mittels Verbindern der Sensoren (12) empfangenen Informationen handzuhaben und daraufhin die Einrichtungen zum Öffnen der Verschlüsse (3) in Echtzeit zu betätigen, wobei die Steuereinheit (4) dazu ausgelegt ist, die von den Temperatur- und Drucksteuerungssensoren (2) in Echtzeit gelieferten Informationen handzuhaben und das Öffnen der Verschlüsse (3) so zu steuern, dass der gewünschte Druck auf das Material in der Kammer konstant gehalten wird.

2. System zur Umwandlung von wärmehärtbaren Materialien und Optimierung der Dosierung von Rohmaterial mittels Kaltkammerdruckformung gemäß dem vorangehenden Anspruch 1, **dadurch gekennzeichnet, dass** es die durch mechanische Einrichtungen wie Reaktionsfedern (8) betätigten Verschlüsse (3) aufweist; die Reaktionsfedern (8) sind mechanisch in den hinteren Teil der Verschlüsse (3) eingefügt, so dass während des Einspritzschritts der auf das Material durch die Presse ausgeübte Druck die Kaltkammer (1) unter Druck setzt; wobei die Verschlüsse (3) in geeigneter Größe dazu ausgelegt sind, geöffnet zu werden, wenn der auf das Material in der unter Druck stehenden Kaltkammer (1) und in den Verteilerkanälen ausgeübte Druck die durch die Reaktionsfedern (8) ausgeübte Kraft übersteigt, was das allmähliche Öffnen der Verschlüsse (3) bewirkt; wobei die Sensoren zum Steuern der Temperatur und des Drucks (2) dazu ausgelegt sind, das Überwachen der Werte sicherzustellen und die Informationen in Echtzeit der Steuereinheit (4) zuzuführen.

3. System zur Umwandlung von wärmehärtbaren Materialien und Optimierung der Dosierung von Rohmaterial mittels Kaltkammerdruckformung gemäß dem vorangehenden Anspruch 1, **dadurch gekennzeichnet, dass** es die durch hydraulische Einrichtungen wie Öldruckzylinder (10) betätigten Verschlüsse (3) aufweist; die Öldruckzylinder (10) sind an den Verschlüssen (3) angeordnet; wobei die Temperatur- und Drucksteuerungssensoren (2) dazu ausgelegt sind, den auf das Material in der unter Druck stehenden Kaltkammer (1) ausgeübten Druck zu überwachen; wobei die Steuereinheit (4) dazu ausgelegt ist, die von den Temperatur- und Drucksteuerungssensoren (2) in Echtzeit bereitgestellten Informationen handzuhaben und das Öffnen der Verschlüsse (3) so handzuhaben, dass der gewünschte Druck auf das Material in der Kammer konstant gehalten wird.

4. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** der Verteilerkanal (1) der unter Druck stehenden Kaltkammer aus Stahl vom Typ Hardox oder ähnlichem besteht, um den Abriebwiderstand des wärmehärtbaren Materials zu überwinden.

5. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** es eine Warneinrichtung (11) aufweist, die dazu ausgelegt ist, zumindest akustische Signale auszugeben, wenn eine Überhitzung des Materials über den gewählten Grenzwert hinaus auftritt.

6. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** es ein in die Form integriertes Temperatur- und Druckerfassungssystem aufweist, das dazu ausgelegt ist, die Temperatur und den Druck in der Kaltkammer zu steuern, um Überdosierungsphänomene zu erkennen.

7. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** es Steuerungssensoren aufweist, die in der Lage sind, mit der Steuereinheit (4) zu kommunizieren, wenn das Material den entferntesten Punkt der zu füllenden Figur erreicht.

8. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** es eine Software zur Analyse von Daten zwischen der Fertigstellung der Endprodukte und der Form aufweist, die dazu ausgelegt ist, den Verschleißgrad oder die Unvollkommenheiten jedes Formnests (5) zu überwachen.

9. System zur Umwandlung von wärmehärtbaren Materialien und Optimierung der Dosierung von Rohmaterial mittels Kaltkammerdruckformung gemäß einem der vorangehenden Ansprüche, **dadurch gekennzeichnet, dass** es eine mit der Steuereinheit (4) verbundene Alarmeinrichtung aufweist, die dazu ausgelegt ist, zumindest akustische Signale auszusenden, um zu warnen, wenn ein Reinigungszyklus erforderlich ist.

## Revendications

1. Système pour transformer des matériaux thermodurcissables et optimiser le dosage de matière première par moulage sous pression en chambre froide, **caractérisé en ce qu'**il comprend :
- un circuit de thermorégulation pourvu d'au moins un capteur de contrôle de température et de pression (2) adapté pour ajuster la température et contrôler la pression d'un matériau thermodurcissable à l'intérieur d'un canal de distribution de chambre froide sous pression (1), le maintenant entre 20 °C et 60 °C en fonction du procédé ; ledit canal de distribution de chambre froide sous pression (1) à l'intérieur du moule étant convenablement dimensionné et traité avec des traitements de surface anti-friction et anti-usure adaptés pour ajuster l'écoulement dudit matériau thermodurcissable à partir d'un cylindre d'injection (6) vers une pluralité d'empreintes (5) à température contrôlée, lesdits capteurs de contrôle de température et de pression (2) étant adaptés pour surveiller la pression exercée sur le matériau à l'intérieur de la chambre froide sous pression (1) ;
- un circuit de refroidissement (7) adapté pour ajuster la température à l'intérieur dudit canal de distribution de chambre froide sous pression (1) ;
- au moins un volet (3) pour chaque empreinte (5) avec la fonction de régulateur de débit dudit matériau thermodurcissable actionné par des dispositifs mécaniques, électriques ou hydrauliques ; lesdits volets (3) étant adaptés pour rester en position fermée pendant l'étape d'injection du matériau jusqu'à l'atteinte de la pression souhaitée à l'intérieur de la chambre et mesurée aux points d'injection uniques, lesdits volets (3) étant ensuite adaptés pour être ouverts progressivement, maintenant la pression souhaitée sur le matériau mesurée par lesdits capteurs pour contrôler la pression (2), lesdits volets (3) étant actionnés par des dispositifs électriques tels que des moteurs électriques (9) ; lesdits moteurs électriques (9) sont situés sur lesdits volets (3) ;
- une unité de commande (4) adaptée pour gérer les informations reçues par lesdits capteurs de contrôle de température et de pression (2) au moyen de connecteurs de capteurs (12) et par conséquent actionner les dispositifs pour ouvrir lesdits volets (3) en temps réel, ladite unité de commande (4) étant adaptée pour gérer les informations fournies en temps réel par lesdits capteurs de contrôle de température et de pression (2) et gérer l'ouverture desdits volets (3) de manière à maintenir constante la pression souhaitée sur le matériau à l'intérieur de la chambre.

2. Système pour transformer des matériaux thermodurcissables et optimiser le dosage de matière première par moulage sous pression en chambre froide, selon la revendication 1 précédente, **caractérisé en ce qu'**il comprend lesdits volets (3) actionnés par des dispositifs mécaniques tels que des ressorts de réaction (8) ; lesdits ressorts de réaction (8) sont mécaniquement interposés dans la partie arrière des volets (3) de sorte que lors de l'étape d'injection, la pression exercée sur le matériau par la presse met la chambre froide (1) sous pression ; lesdits volets (3) de taille appropriée étant adaptés pour s'ouvrir lorsque la pression exercée sur le matériau à l'intérieur de la chambre froide sous pression (1) et à l'intérieur des canaux de distribution dépasse la force exercée par les ressorts de réaction (8), entraînant l'ouverture progressive des volets (3) ; lesdits capteurs pour commander la température et la pression (2) étant adaptés pour assurer la surveillance des valeurs et fournir les informations à l'unité de commande (4) en temps réel.

3. Système pour transformer des matériaux thermodurcissables et optimiser le dosage de matière première par moulage sous pression en chambre froide, selon la revendication 1 précédente, **caractérisé en ce qu'**il comprend lesdits volets (3) actionnés par des dispositifs hydrauliques tels que des vérins à pression d'huile (10) ; lesdits vérins à pression d'huile (10) sont situés sur lesdits volets (3) ; lesdits capteurs de contrôle de température et de pression (2) étant adaptés pour surveiller la pression exercée sur le matériau à l'intérieur de la chambre froide sous pression (1) ; ladite unité de commande (4) étant adaptée pour gérer les informations fournies en temps réel par lesdits capteurs de contrôle de température et de pression (2) et gérer l'ouverture desdits volets (3) de manière à maintenir constante la pression souhaitée sur le matériau à l'intérieur de la chambre.

4. Système pour transformer des matériaux thermodurcissables et optimiser le dosage de matière première par moulage sous pression en chambre froide, selon l'une des revendications précédentes, **caractérisé en ce que** ledit canal de distribution de chambre froide sous pression (1) est en acier de type Hardox ou similaire afin de surmonter la résistance à l'abrasion du matériau thermodurcissable.

5. Système pour transformer des matériaux thermodurcissables et optimiser le dosage de matière première par moulage sous pression en chambre froide, selon l'une des revendications précédentes, **caractérisé en ce qu'**il comprend un dispositif d'alerte (11) adapté pour émettre des signaux au moins de type acoustique s'il y a surchauffe du matériau au-delà de la limite sélectionnée.

6. Système pour transformer des matériaux thermodurcissables et optimiser le dosage de matière première par moulage sous pression en chambre froide, selon l'une des revendications précédentes, **caractérisé en ce qu'**il comprend un système de détection de température et de pression intégré dans le moule adapté pour contrôler la température et la pression à l'intérieur de la chambre froide afin d'identifier des phénomènes de surdosage.

7. Système pour transformer des matériaux thermodurcissables et optimiser le dosage de matière première par moulage sous pression en chambre froide, selon l'une des revendications précédentes, **caractérisé en ce qu'**il comprend des capteurs de commande aptes à communiquer avec ladite unité de commande (4) lorsque le matériau atteint le point le plus éloigné de la figure à remplir.

8. Système pour transformer des matériaux thermodurcissables et optimiser le dosage de matière première par moulage sous pression en chambre froide, selon l'une des revendications précédentes, **caractérisé en ce qu'**il comprend un logiciel d'analyse de données entre la finition des produits finaux et le moule adapté pour surveiller le niveau d'usure ou d'imperfections de chaque empreinte (5).

9. Système pour transformer des matériaux thermodurcissables et optimiser le dosage de matière première par moulage sous pression en chambre froide, selon l'une des revendications précédentes, **caractérisé en ce qu'**il comprend un dispositif d'alerte connecté à l'unité de commande (4) adapté pour émettre des signaux au moins de type acoustique afin d'avertir s'il est nécessaire d'avoir un cycle de nettoyage.
